(19) Europäisches Patentamt
European Patent Office
Office européen des brevets

(11) **EP 1 959 625 B1**

(12) **EUROPEAN PATENT SPECIFICATION**

(45) Date of publication and mention
of the grant of the patent:
**18.02.2009 Bulletin 2009/08**

(51) Int Cl.:
*H04L 27/26* (2006.01)   *H04B 1/10* (2006.01)

(21) Application number: **07003159.6**

(22) Date of filing: **14.02.2007**

(54) **Receiver apparatus for detecting narrowband interference in a multi-carrier receive signal**

Empfängergerät zur Erfassung von Schmalbandinterferenz in einem Mehrträgerempfangssignal

Appareil de réception pour la détection d'interférence à bande étroite dans un signal de réception multiporteur

(84) Designated Contracting States:
**DE GB**

(43) Date of publication of application:
**20.08.2008 Bulletin 2008/34**

(73) Proprietor: **NTT DoCoMo Inc.**
**Chiyoda-ku**
**Tokyo 100-6150 (JP)**

(72) Inventors:
• **Morelli, Michele**
**56012 Fornacette**
**Pisa (IT)**
• **Moretti, Marco**
**50122 Firenze (IT)**
• **Mazzoni, Tiziano**
**50050 Cerreto Guidi**
**(FI) (IT)**
• **Cosovic, Ivan**
**80339 Munich (DE)**

(74) Representative: **Stöckeler, Ferdinand et al**
**Schoppe, Zimmermann,**
**Stöckeler & Zinkler**
**Postfach 246**
**82043 Pullach bei München (DE)**

(56) References cited:
**WO-A-20/04015946**       **US-A1- 2006 133 259**

• **ZHANG D ET AL: "Receiver window design for narrowband interference suppression in IEEE 802.11a system" COMMUNICATIONS, 2004 AND THE 5TH INTERNATIONAL SYMPOSIUM ON MULTI-DIMENSIONAL MOBILE COMMUNICATIONS PROCEEDINGS. THE 2004 JOINT CONFERENCE OF THE 10TH ASIA-PACIFIC CONFERENCE ON BEIJING, CHINA 29 AUG.-1 SEPT. 2004, PISCATAWAY, NJ, USA, IEEE, US, 29 August 2004 (2004-08-29), pages 839-842, XP010765081 ISBN: 0-7803-8601-9**

**Description**

Background

The present invention is in the field of multi-carrier dynamic spectrum sharing systems and particularly in narrowband interference detection in shared spectrum data transmission.

Multi-carrier dynamic spectrum sharing (DySS = Dynamic Spectrum Sharing) systems derive their denomination from the fact that they operate over a wide bandwidth where other narrowband services can be active. Especially OFDM-systems (OFDM = Orthogonal Frequency Domain Multiplexing) can use non-contiguous groups of subcarriers in an interfered spectrum. In particular, unmodulated, or also called virtual, subcarriers will be placed over those frequency intervals occupied by narrowband communication systems so as to limit any possible interference to a tolerable level. Additionally, in license exempt bands even active OFDM subcarriers can be affected by interference from other signals, for example from Bluetooth. Possibly strong narrowband interference (NBI = Narrowband Interference) within the signal spectrum complicates considerably the synchronization task of a receiver.

Generally, all OFDM systems that exploit synchronization preambles for synchronization purposes and frequency correction purposes are affected by the harmful influence of narrowband signals, for example, in the case of spectrum sharing systems. This is in particular disadvantageous as spectrum sharing is considered to play a significant role in the future of wireless systems, as for example in fourth generation systems (4G = fourth generation). Since bandwidth is a scarce resource, these systems have to find a way to establish successful ways to cope with possible in-band interference, as the number of active wireless systems is steadily increasing.

The effect of strong NBI is such that the common approach of using a dedicated training block composed by several repeated parts for timing and frequency acquisition experiences significant degradations in a spectrum sharing system. The disadvantage of conventional systems is therefore, that the synchronization and frequency-correcting task of any receiver suffers from narrowband interference, implying lowered overall system performance.

WO 2004/15946 A1 discloses a method and a system for use in a wireless-local-area network, for example, utilizing OFDM, for simultaneously estimating the unknown multi-path channel and noise characteristics by using channel and noise estimates to improve the system performance in the presence of narrowband interferers. Estimates are provided for the unknown multi-path channel and noise characteristic without a-priori knowledge of the location of the interference in the band and this information is used to generate soft-metrics for a Viterbi decoder. Channel and noise estimates can be determined with a higher accuracy, the packet error rate of, for example, a WLAN system may be maintained, despite collisions with interfering packets, increasing the robustness towards narrowband interference.

Zhang D. et al: "Receiver window design for narrowband interference suppression in IEEE 802.11a system", Communications, 2004 and the 5th International Symposium on Multi-dimensional mobile communications proceedings, The 2004 joint conference of the 10th Asia Pacific conference in Beijing, China, 29 Aug.-1 Sept., 2004, Piscataway, NJ, USA, IEEE, US, 29 August 2004 (2004-08-29), pages 839-842, XP010765081, ISBN: 0-7803-8601-9 discloses an OFDM system, for example, in terms of the IEEE 802.11a standard where the Fourier transform is used in demodulation. A known effect of this system is the so-called "spectral leakage" in discrete Fourier transform, where narrowband interference can be spread in the spectrum and strongly impact adjacent sub-channels. Conventional concepts, for example, proposed receive window functions to suppress narrowband interference spreading OFDM systems. The authors propose usage of a Hanning window used with an IEEE 802.11a preamble and the physical layer frame to improve channel estimation. Window selection for data reception based on measurements of window wireless environments is also investigated. The authors demonstrate that channel estimation can be improved by using windowing with WLAN preambles.

It is the object of the present invention to provide a concept to efficiently detect narrowband interference in order to enable narrowband interference reduction.

The object is achieved by a receiver apparatus according to claim 1 and a method for receiving according to claim 12.

The object is achieved by a receiver apparatus for detecting narrowband interference in a multi-carrier receive signal. The multi-carrier receive signal being comprised of a plurality of subcarriers and having a structure of sequential time frames, the receiver apparatus comprising a means for transforming a composed receive signal, which is based on a transmit signal having subcarriers with a predefined amplitude and having subcarriers with a zero amplitude, to the frequency domain to obtain a composed receive signal spectrum, the composed receive signal being a composed of multi-carrier signals of multiple time frames. The receiver apparatus further comprising a means for detecting narrowband interference by comparing subcarrier intensities from the composed receive signal spectrum to a detection threshold and a means for cancelling a subcarrier in the composed receive signal spectrum if the intensity of the subcarrier is above the detection threshold.

The present invention is based on the finding that an existing preamble structure, especially of 802.11 systems, can be used to detect narrowband interference in shared spectrum systems. The existing systems do not utilize all subcarriers for the preamble and narrowband interference can be detected in the gaps of unused subcarriers during the preamble period. Once the narrowband interference is detected, it can easily be reduced by demasking in the frequency domain, i.e. by using only subcarriers having frequencies that are not occupied by narrowband interferers. Especially in a WLAN (WLAN = Wireless Local Area Network) the existing preamble can be used to detect narrowband interference.

Embodiments of the present invention are detailed in the following using the accompanying figures, in which

Fig. 1a    shows an embodiment of a receiver apparatus;

Fig. 1b    shows a block diagram of an embodiment of a receiver;

Fig. 2    displays a table of WLAN system simulation parameters;

Fig. 3    shows an embodiment of a WLAN frame structure;

Fig. 4    shows an embodiment of a frame structure for simulations;

Fig. 5    shows and embodiment of a structure of a preamble;

Fig. 6a    illustrates narrowband interference estimation using two exemplified spectra;

Fig. 6b    shows a view graph of simulation results of bit error rates versus a number of cancelled subcarriers;

Fig. 7    shows a block diagram of an embodiment of narrowband interference cancellation;

Fig. 8    shows simulation results of bit error rates versus an interference detection threshold;

Fig. 9    shows simulation results of bit error rates versus bit energy over spectral noise density for different frequency offsets;

Fig. 10    shows simulation results of bit error rates for different numbers of narrowband interferers;

Fig. 11    shows simulation results of bit error rates for different signal-to-interference ratios;

Fig. 12    shows simulation results in a histogram of timing estimates without narrowband interference;

Fig. 13    shows simulation results in a histogram of timing estimates with narrowband interference and without narrowband interference cancellation;

Fig. 14    shows simulation results in a histogram of timing estimates with narrowband interference cancellation; and

Fig. 15    shows simulation results of a carrier frequency estimation mean square error.

Fig. la shows an embodiment of a receiver apparatus 100 for detecting a narrowband interference in a multi-carrier receive signal, the multi-carrier receive signal being comprised of a plurality of subcarriers and having a structure of sequential time frames. The receiver apparatus 100 comprises a means 110 for transforming a composed receive signal, which is based on a signal having subcarriers with a predefined amplitude and having subcarriers with a zero amplitude, to the frequency domain to obtain a composed receive signal spectrum, the composed receive signal being composed of multi-carrier receive signals of multiple time frames. The receiver apparatus 100 further comprises a means 120 for detecting narrowband interference by comparing subcarrier intensities from the composed receive signal spectrum to a detection threshold and further comprises a means 130 for cancelling a subcarrier in the composed receive signal spectrum, if the intensity of the subcarrier is above the detection threshold.

In another embodiment the means 120 for detecting narrowband interference is adapted for comparing subcarrier intensities from the composed receive signal spectrum of a subcarrier, which is based on a zero amplitude subcarrier in the transmit signal, to the detection threshold. The receiver apparatus 100 can further comprise a means for transforming the composed receive signal spectrum with cancelled subcarriers to the time domain to obtain a composed receive signal with reduced narrowband interference. The multi-carrier receive signal can be based on a transmit signal, which is composed of repeated transmit sequences, wherein a duration of a transmit sequence is less than a time frame. In one embodiment the duration of a transmit sequence is a quarter of the time frame, as for example in a WLAN preamble. In another embodiment, the transmit sequence is repeated a number of times, in a preferred embodiment as for example according to the 802.11 specifications the transmit sequence is repeated ten times.

In one embodiment the multi-carrier receive signal is based on a preamble signal according to the 802.11 specifications. The receiver apparatus 100 can further comprise a means for time synchronizing on the composed receive signal with reduced narrowband interference. Moreover, in one embodiment, the receiver apparatus 100 further comprises a means for estimating a frequency offset based on the composed receive signal with reduced narrowband interference. The means for cancelling a subcarrier can be further adapted for cancelling subcarriers within a frequency range around a frequency of the subcarrier, which's intensity is above the detection threshold. For a case where the narrowband interferer collides with a subcarrier of the preamble, it is one embodiment of the present invention to cancel that subcarrier if the narrowband interference is detected on any of the neighbor subcarriers. In one embodiment therefore, the frequency range in which subcarriers are cancelled spans across two consecutive subcarriers. In general embodiments of the present invention can be applied to any OFDM systems.

According to embodiments of the present invention, narrowband interferers are estimated in the frequency domain by evaluating subcarrier intensities against a detection threshold, upon which the narrowband interferers can be suppressed by setting the subcarrier intensity to zero if interference is detected, provided that the number of subcarriers set to zero is limited, the synchronization accuracy degradation is tolerable.

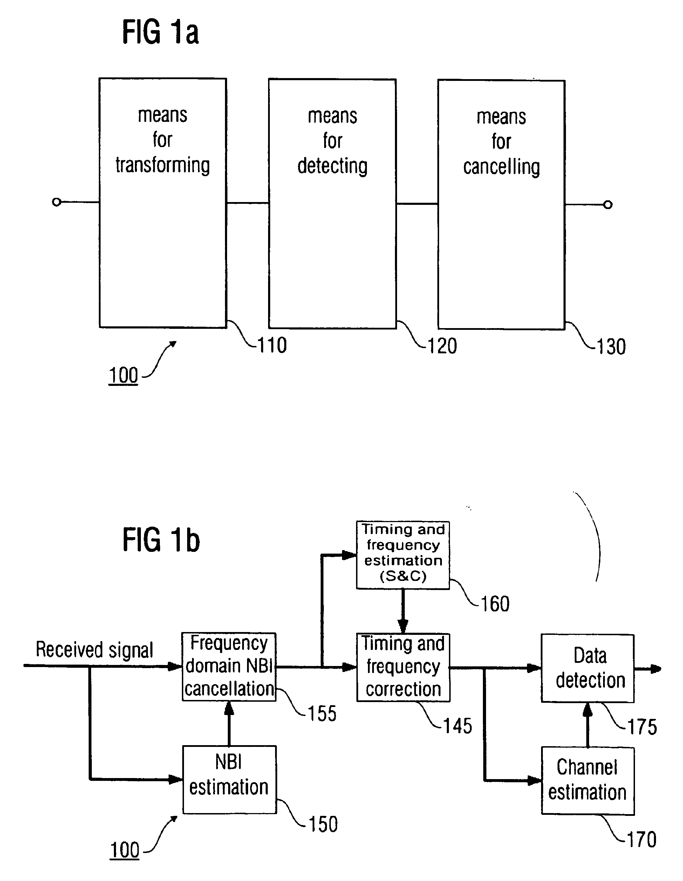

Fig. 1b shows a block diagram of an embodiment of a receiver apparatus 100. The receive signal undergoes the narrowband interference estimation 150 as described above. The narrowband interference can then be cancelled by the narrowband interference canceller 155 in the frequency domain. Based on the signal with reduced narrowband interference, a timing and a frequency estimator 160 can provide timing and frequency corrections to a timing and frequency corrector 165. Once the timing and frequency is corrected a channel estimator 170 can estimate the radio channel and provide a channel estimate to a data detector 175, which finally detects the data. Fig. 1b shows a conceptional embodiment of a receiver apparatus 100 for a multi-carrier system. After the narrowband interference has been estimated and suppressed, timing and frequency estimation can be performed using standard algorithms, for example by means of a Schmidl and Coxs (S&C = Schmidl and Cox) algorithm.

A multi-carrier signal that spans an overall bandwidth $B$ divided in $N$ orthogonal subcarriers is considered in the following to detail a preferred embodiment of the present invention. In a multi-carrier system due to Doppler shifts and/or oscillator instabilities, a frequency $f_{LO}$ of the local oscillator is not exactly equal to the received carrier frequency $f_c$. The difference $f_d=f_c-f_{LO}$ is referred to as carrier frequency offset (CFO = Carrier Frequency Offset). In addition, since time scales on the transmit and receive sides are not perfectly aligned, at the start-up the receiver does not know where the OFDM symbols start and, accordingly, the DFT (DFT = Discrete Fourier Transformation) window will be placed in a wrong position. Since small or fractional timing errors do not produce any degradation of the system performance, it suffices to estimate the beginning of each received OFDM block within one sampling period T=1/B. In the following $\theta$ denotes the number of samples by which the receive time scale is shifted from its ideal setting. Thus, the time domain samples (tds = time domain samples) of the received signal, collected at the instants $t=nT$, can be expressed as

$$r(n) = e^{j2\pi vn/N} \sum_{i} \sum_{l=0}^{L-1} h(\ell)s_i(n-\theta-\ell-iN) + i(n) + n(n) \qquad (1)$$

where $N$ is the OFDM block size, $v=f_d NT$ is the frequency error normalized to the subcarrier spacing, $\mathbf{h}=[h(0), h(1), ..., h(L-1)]^T$ is the discrete-time channel impulse response (CIR = Channel Impulse Response) encompassing the physical channel as well as the transmit/receive filters, $i(n)$ is the NBI term and, finally, $n(n)$ is complex-valued AWGN with variance $\sigma_n^2$.

After NBI cancellation, the frequency and timing synchronization units employ the received samples $r(n)$ to compute estimates of $v$ and $\theta$, in the following denotes as $\hat{v}$ and $\hat{\theta}$. The former is used to counter-rotate $r(n)$ at an angular speed $2\pi\hat{v}/N$, while the timing estimate is exploited to achieve a correct positioning of the receive DFT window. Specifically, the samples $r(n)$ with indices $iN+\hat{\theta}\leq n\leq iN+\hat{\theta}+N-1$ are fed to the DFT device and the corresponding output is used to detect the data symbols within the $i$-th OFDM block.

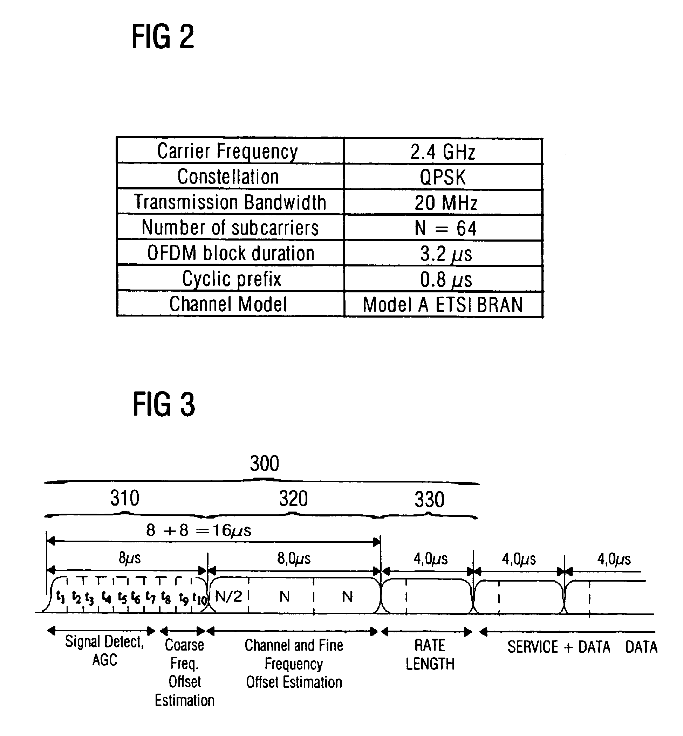

In the following a WLAN scenario where the desired signal spans a 20 MHz bandwidth and the number of subcarriers is 64, is considered. Fig. 2 shows a set of system parameters used for a WLAN scenario, which serves as for simulating an embodiment. In order to speed up software development and simulations some characteristics of the IEEE 802.11 have not been implemented. Among the features that are currently missing, there is error protection coding and implementation of virtual carriers, however it does not hinder to demonstrate the achievable benefits of embodiments of the present invention with respect to narrow band interference detection.

Fig. 3 shows a frame structure, which is used in order to test the WLAN scenario, which is compliant with the 802.11 standard. At the beginning of each frame there is a preamble 300 consisting of three synchronization blocks 310, 320 and 330. The first block 310 serves for signal detection, automatic gain control (AGC = Automatic Gain Control) and coarse frequency offset estimation. The block 310 is obtained by repeating ten times a short training sequence with a duration of $t_i=0.8\mu s$, i=1..10, yielding an overall duration of $8\mu s$. The length of the short training sequence is $N/4$. The second block 320 serves for channel and fine frequency offset estimation and also has a duration of 8 $\mu s$. In the time domain the block 320 consists of two long training sequences of N symbols and a preamble of $N/2$ symbols. The third block 330 conveys information about the type of modulation and the coding rate as used in the rest of the frame and has a duration of $4\mu s$. Following the third block 330 service and data blocks are transmitted, which are out of the scope of the present application.

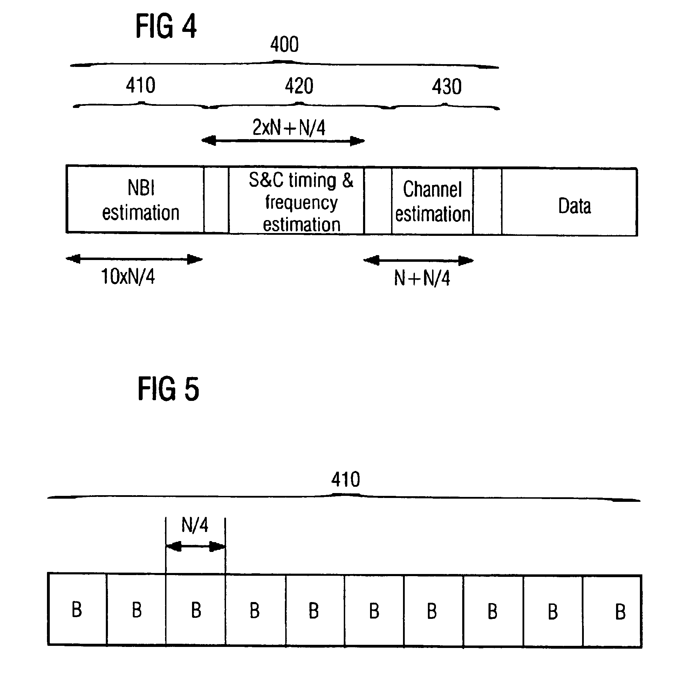

As shown in Fig. 4, in the analysis carried out with the embodiment of the present invention, a simplified frame structure was utilized to carry out simulations. The frame 400, which is depicted in Fig. 4, is comprised of three blocks 410, 420 and 440. The functions described in Fig. 3 are remapped to functions of the three blocks 410, 420 and 430 of the preamble 400 in Fig. 4. The block 410 of the preamble 400 is particularly suited to estimate the presence of narrowband interference, because of its structure. It contains ten repetitions of a training sequence of length $N/4$. Moreover, the second block 420 can be used for both timing and frequency estimation, by means of for example the S&C algorithm, and the third block 430 can be used for channel estimation. As indicated in Fig. 4, the length of the second block 420 is $2xN+N/4$ and the length of the third block 430 is $N+N/4$. The remapping has negligible effects on the synchronization performance and it is motivated by the need for fast and reliable simulation results. Results obtained for example, for the WINNER (WINNER = Wireless World Initiative New Radio) scenario show that, after the interference cancellation, the first block can be used for timing synchronization as well with almost no degradation.

Fig. 5 depicts a structure of the first block 410 of the preamble 400. It indicates the general repetitions of a block B of size $N/4$. The NBI estimation algorithm as an embodiment of the present invention has been designed under the assumption that prior to NBI estimation there is a maximum timing error $\theta$ up to N/2 (i.e. $0\leq\theta\leq N/2$). The algorithm relies on the specific structure of the first block 410 of the WLAN preamble 400, which is shown in Figs. 4 and 5. The block consists of a 10-fold repetition of a short training sequence $\{b(n)\}(n=1,...,N/4)$. Neglecting the thermal noise and carrier frequency offset, at the receiver the $n$-th received tds $r(n)$ of the preamble is:

$$r(n) = x_\theta(n) + i(n) \, , \qquad\qquad (2)$$

where $x(n) = \sum_{l=0}^{L-1} h(\ell)s(n-\ell)$ is the desired signal after being filtered by the channel $h(n)$ of length $L$ samples and $x_\theta(n)=x(n-\theta)$.

Provided that $L+\theta\leq N/2$, the sequence $\{x_\theta(n)\}(n=1,...,2N)$, which collects the tds of the first block of the preamble, is periodic of period $N/4$

$$x_\theta(n+kN/4) = \sum_{\ell=0}^{L-1} h(\ell)s(n-\theta+kN/4-\ell) = x_\theta(n) \quad , \qquad k = 0,...,9 \, . \quad (3)$$

The last equality in (3) is due to the fact that the sequence $\{s(n)\}$ is periodic of period $N/4$ for $n = 1,...,10N/4$ and thus $s(n-\theta+kN/4-l)=s(n-\theta-l)=b(mod(n-\theta-\ell,N/4))$.

Let $R(m),m=1,...,2N$ be the outcome of the DFT of the first 2N-dimensional block of the preamble neglecting noise. It is

$$R(m) = X_\theta(m) + I(m) \quad m = 1,...2N \qquad\qquad (4)$$

where $X_\theta(m)$ and $I(m)$ are the DFT of the desired signal and the interference, respectively. Because of the periodicity of $\{x_\theta(n)\}$, it is

$$X_\theta(m) = \begin{cases} A_\theta(m) & m = 8 \times l \quad l = 1,...,N/4 \\ 0 & otherwhise \end{cases} \qquad (5)$$

where $A_\theta(m) = 8 \sum_{n=0}^{N/4-1} x_\theta(n)e^{j2\pi nm/2N}$ . Thus substituting (5) in (4) yields

$$R(m) = \begin{cases} A_\theta(m) + I(m) & m = 8l \quad l = 1,...,N/4 \\ I(m) & otherwhise \end{cases} \qquad . \qquad (6)$$

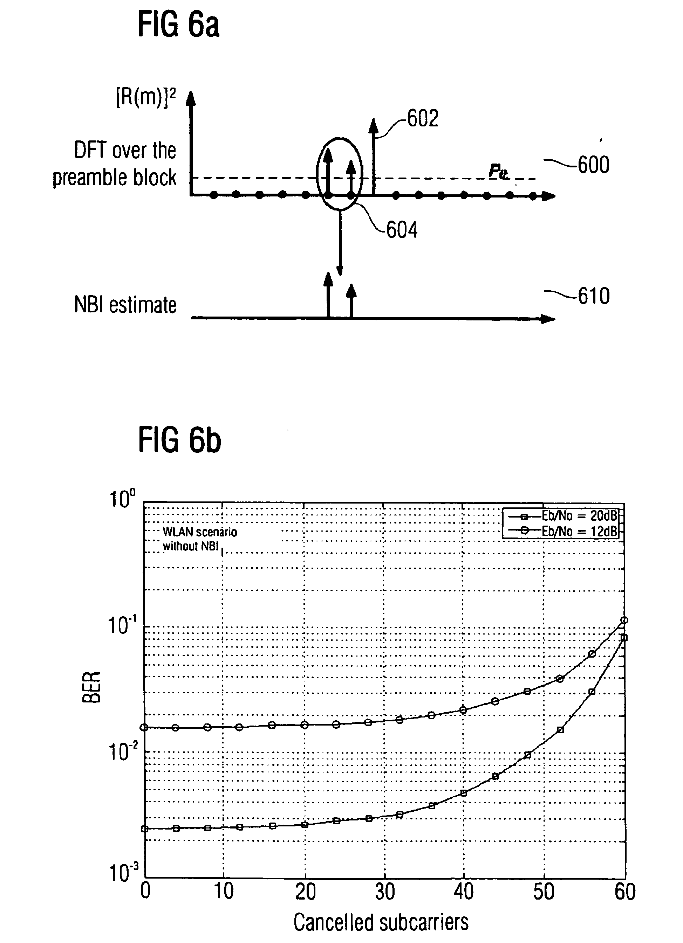

Therefore, in absence of carrier frequency offset, $R(m)$ is an unbiased optimum estimator for NBI on all the subcarriers with indexes $m \neq 8l, l=1,...,N/4$. The squared module of $R(m)$ is confronted with an adequate threshold $P_{th}$, if $|R(m)|^2 \rangle P_{th}$, it is assumed that there is an NBI source transmitting over the $m$-th subcarrier. Fig. 6a shows an embodiment of the NBI estimation algorithm. The $2N$-dimensional DFT over the preamble block 410 is computed and its output is used to estimate the interference over the subcarriers with indexes $m \neq 8l$, $l=1,...,N/4$.

Fig. 6a depicts two spectra determined according to the above description. The first spectrum 600 results from a DFT over the preamble block 410, and it shows an intended subcarrier 602 and narrowband interference 604. As the subcarrier 602 was intended, it can be concluded from the spectrum 600 that the narrowband interference spans across the subcarriers 604, and accordingly a narrowband interference estimate can be carried out as shown in the second spectrum 610.

The task of detecting interference on the subcarriers with indexes $m=8l$, $l=1,...,N/4$ is more challenging because of the presence of the desired signal. Since NBI estimation is performed before having acquired any synchronization information of the desired signal, the optimal choice would be a joint NBI estimation/signal synchronization strategy. On the other hand, this approach, though optimal, requires a very large computational effort. Therefore, to keep the overall complexity low a simple heuristic is proposed if any subcarrier adjacent, i.e. with index $m=8 \pm 1$, results interfered then also the subcarrier carrying the signal, i.e. with index $m=8l$, is considered interfered.

Residual carrier frequency offsets destroy the orthogonality between subcarriers in a multi-carrier system. Thus, since the whole NBI estimation algorithm relies on the specific structure of the desired signal in the first preamble block, even small frequency offsets risk to severely affect the NBI estimation algorithm. In particular, in the considered case the effect of a frequency offset $\nu$ is that an increasingly large fraction of the desired signal power is received on subcarriers with indexes $m \neq 8l$ and thus also the desired signal risks to be detected as interference. Numerical results show that an embodiment of the NBI estimation algorithm is robust to offsets up to 20% of the subcarrier spacing $1/NT$, which are the ranges of offsets for the WLAN scenario. For larger offsets the NBI estimation is unreliable and the overall performance deteriorates requiring a different NBI estimation algorithm as in the case of e.g. a WINNER scenario.

After having decided which subcarriers are occupied by NBI sources, interference is removed by setting to zero those subcarriers that result interfered. Embodiments of the present invention remove or reduce all detected interference so that the timing synchronization and the carrier frequency estimation algorithms can work reliably. Nonetheless, setting to zero a certain number of subcarriers has an impact also on the desired signal, namely:

- the available energy for synchronization is reduced proportionally to the number of cancelled subcarriers and thus errors due to the thermal noise are more likely. On the other hand, in a WLAN scenario the synchronization preamble is long enough to be very robust against the thermal noise. Fig. 6b shows the BER as a function of the number of subcarriers cancelled. The synchronization algorithms show little degradation when the number of subcarriers cancelled is up to 50% of the total number.
- distorts the signal.

The effect of interference power leakage, which is evoked by windowing an interference signal in the time domain, is to spread the interference over a larger number of subcarriers, and thus complicates the task of NBI cancellation. The problem of interference power leakage can be tackled by increasing the DFT block-size e.g. to 4N. By doing so, the main lobe of a sinc function, resulting from rectangular windowing in the time domain is four times more compact and accordingly the power leakage of NBI is likewise reduced. Moreover, increasing the DFT window to 4N has the beneficial effect of reducing the distortion of the cancellation of the desired signal. Thus, to improve the NBI cancellation algorithm, additional time domain samples are considered, which can e.g. be obtained from an interpolation or an oversampling operation.

Symbol and timing estimation can be performed according the algorithm proposed by S&C. Since it is assumed to have cancelled all the NBI, interference does not appear explicitly anymore in the received signal equations.

Symbol timing recovery is based on a search for training symbols with two identical halves in the time domain, which remain identical after passing through the channel, except that there will be a phase difference between them caused by the carrier frequency offset. The two halves of the training symbol are made identical by transmitting two identical OFDM blocks of length $N$. The idea of S&C to achieve timing synchronization is to correlate the first and the second OFDM blocks using a $2N$-leg window. The timing metric adopted to estimate the correct timing is

$$\Lambda(d) = \frac{|P(d)|^2}{R^2(d)} , \qquad (7)$$

where

$$P(d) = \sum_{n=0}^{N-1} r^*(n+d)r(n+d+N) , \qquad (8)$$

$$R(d) = \sum_{k=0}^{N-1} |r(k+d+N)|^2 . \qquad (9)$$

Note that $d$ is a time index corresponding to the first sample in a window of 2N samples. The estimate for the correct value of the symbol timing is found by maximizing the metric in (7),

$$\hat{\theta} = \arg\max_d \{\Lambda(d)\} . \qquad (10)$$

After having estimated the correct timing, all the tds of the training symbols are

$$r(n+\hat{\theta}) = s(n)e^{j2\pi n v/N} + n(n+\hat{\theta}) . \qquad (11)$$

Thus, taking advantage of the periodicity of the training symbol, the carrier frequency offset can be estimated as

$$\hat{v} = \frac{1}{2\pi} \arg\{R\} , \qquad (12)$$

where $R$ is the $N$-leg correlation of the received samples of the training symbol

$$R = \frac{1}{N}\sum_{n=0}^{N-1} r^*(n+\hat{\theta})r(n+\hat{\theta}+N) \ . \tag{13}$$

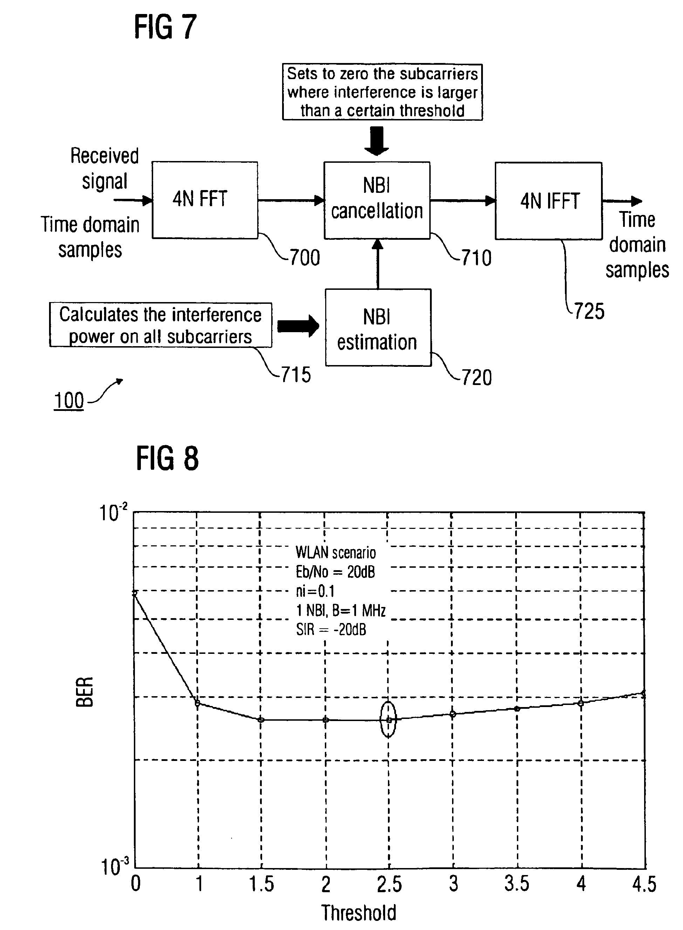

The narrowband interference block can be enhanced. Fig. 7 depicts a block diagram of a receiver apparatus 100. The time domain samples of the receive signal are input to a 4N-FFT 700 (FFT = Fast Fourier Transformation) with, which has the size of 4N. The number of samples can, for example, be achieved by interpolating between samples obtained with a sampling frequency or respectively by oversampling. The spectrum of the receive signal samples is provided to the narrowband interference cancellation block 710. A block 715 calculates the interference power on all subcarriers and provides the calculated powers to a narrowband interference estimation block 720, which provides the subcarriers to be cancelled to the narrowband cancellation block 710. The block 710 then cancels the subcarriers on which the interference was detected, respectively on which the intensity was above the detection threshold as indicated in Fig. 7. The signal with the reduced narrowband interference is then provided to an inverse 4N-IFFT 725 (IFFT = Inverse Fast Fourier Transformation) of size 4N, where an interference reduced receive signal is back-transformed to the time domain.

This section evaluates the performance of an embodiment of an NBI cancellation algorithm in a WLAN scenario.

The interference term in (2) is the sum of the contribute of all NBI sources, $i(n) = \sum_{j} i^{(j)}(n)$ in the system. Each NBI source $i^{(j)}(t)$ is represented as a pulse amplitude modulated (PAM Pulse Amplitude Modulated) signal, whose spectrum is centered at the normalized frequency $\nu_{(j)} \in [1,N]$:

$$i^{(j)}(t) = A^{(j)}\sum_{m} c_m^{(j)} g(t - mT_s)e^{\frac{j2\pi\nu_{(j)}t}{NT}} \ , \tag{14}$$

where the symbols $c_m^{(j)} = a_m^{(j)} + jb_m^{(j)}, a_m^{(j)}, b_m^{(j)} \in \left\{\pm 1, \pm 3, ..., \pm\sqrt{M}\right\}$ are i.i.d random variables that belong to a M-point QAM constellation, $A^{(j)}$ is a parameter that scales the interfering source power that determines the position of the NBI source in the signal spectrum, $T_s$ is the NBI symbol interval and the pulse-shaping function $g(t)$ is a raised cosine function with roll-off $\alpha$

$$G(f) = \begin{cases} T_s & |f| \le \frac{1-\alpha}{2T_s} \\ T_s \cos^2(\frac{\pi}{4\alpha}(|2fT_s| - 1 + \alpha)) & \frac{1-\alpha}{2T_s} \langle |f| \le \frac{1+\alpha}{2T_s} \\ 0 & \frac{1+\alpha}{2T_s} \langle |f| \end{cases} \ . \tag{15}$$

Under these assumptions, the bandwidth occupied by each NBI source is

$$B_{NBI} = (1+\alpha)\frac{1}{T_s} \ . \tag{16}$$

Most of the results have been obtained in the presence of a strong NBI interferer, occupying a bandwidth $B_{NBI}$=1$MHz$ with a with $SIR$=-20dB (SIR = signal-to-interference ratio). The signal-to-interference ratio is defined as the ratio of the average power received over a sub-carrier of the desired signal and the power of the interfering signal.

$$SIR = \frac{E\left\{\sum_{m=1}^{N}|S(m)|^2\right\}}{NE\left\{\sum_{m=1}^{N}|I(m)|^2\right\}} \qquad (17)$$

To study the performance of synchronization in presence of NBI four different parameters are used in the following, namely bit error rate (BER = Bit Error Rate), histograms of the timing error, mean square error (MSE = Mean Square Error) of the carrier frequency offset and signal-to-noise ratio (SNR) degradation.

The BER is computed assuming that after synchronization transmission will take place only over those sub-carriers that are not interfered. Therefore it is assumed that the signal is virtually interference-free and NBI will affect the performance only through synchronization errors. Channel estimation is performed in absence of NBI. Fig. 8 plots the measured BER for different values of interference detection thresholds for the NBI cancellation algorithm. These results have been obtained for one NBI that occupies a 1MHz bandwidth and SIR=-20dB. The frequency offset is $\nu$=0.1 and $E_b/N_0$=20dB. For small values of the threshold $\nu$ the measured BER is large because a large number of sub-carriers of the received signal is set to zero. Thus, interference is removed but useful signal too and this leads to poor timing synchronization and BER degradation. As it can be noticed from the results there is a wide range of threshold values that yield optimum or quasi-optimum results. Thus, the choice of the threshold is not a critical issue provided that it is chosen within this range. For large values of the threshold not all the interference is detected and removed and thus the BER grows.

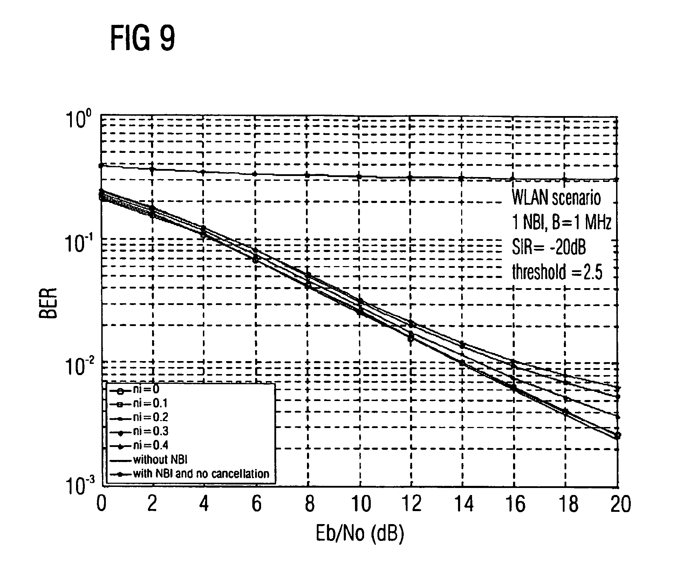

Fig. 9 shows the results obtained for utilizing different values of frequency offsets $\nu$("ni" in the figures). The proposed algorithm is robust to frequency errors up to $\nu$=0.2. For larger values of the frequency offset the loss is more than 2dB with respect to ideal curve obtained without interference. On the other hand, in case narrowband interference is not taken care of, the system performance is very poor.

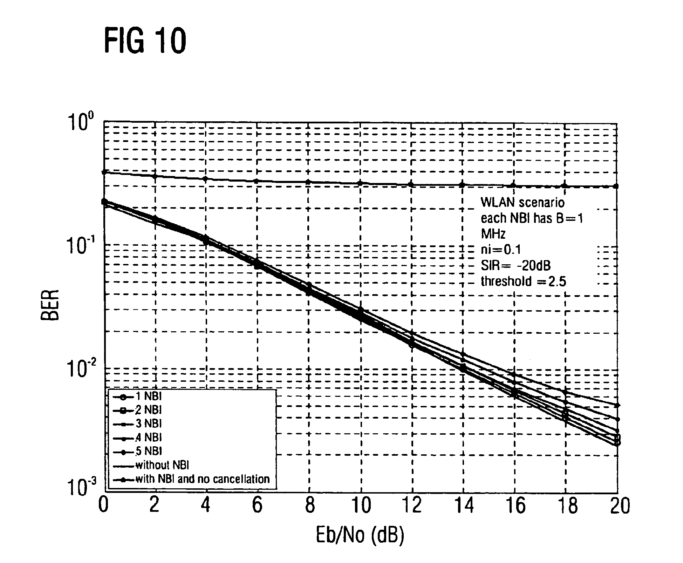

Fig. 10 shows the BER results as a function of the number of interferers. The interference power is fixed to yield an overall $SIR$=-20dB. By increasing the number of interferers, the number of sub-carriers that are set to zero increases too. In any case, results show that the embodiment of an NBI detection algorithm is robust with respect to number of interferers, i.e. with 5 interferers that occupy approximately 25% of the signal bandwidth the loss is lower than 4dB.

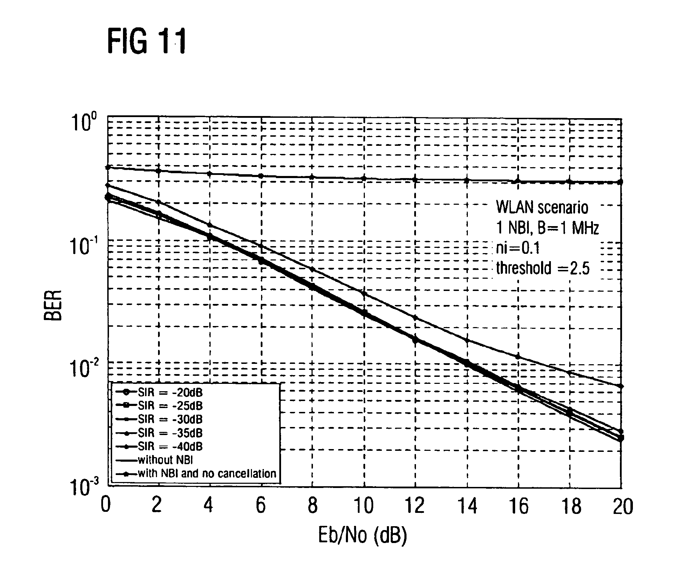

Fig. 11 shows the BER results as function of the $E_b/N_0$ for different values of the power of one NBI source. As a matter of fact, the algorithm is robust to strong interference up to $SIR$ = -35 dB. For even stronger interference too much interfering power leaks onto the desired signal and the system performance shows some degradation.

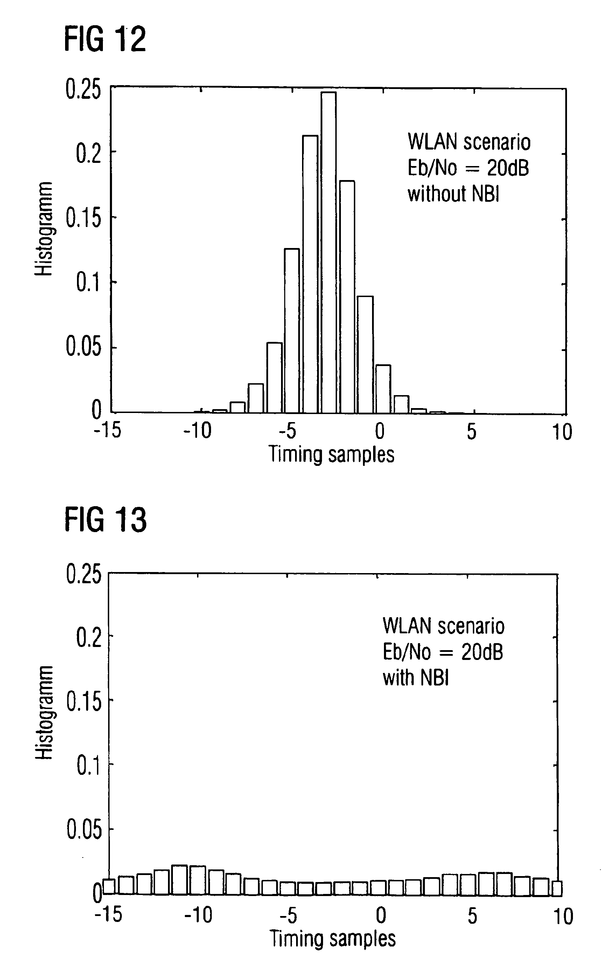

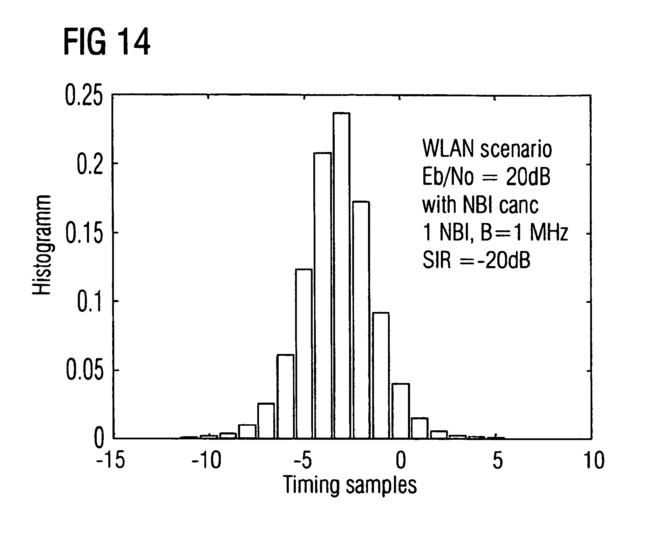

To measure the accuracy of the timing synchronization unit, histograms approximating the probability density function of the timing error $\Delta\theta=\hat{\theta}-\theta$ are used. Figs. 12-14 show the timing histograms obtained for timing synchronization in a system without NBI (Fig. 12), a system with strong NBI (Fig. 13) and with strong NBI after interference cancellation (Fig. 14), respectively. Correct synchronization is achieved if the timing estimate lies inside the range [$CP_{lenyth}$ -L, 0] ($CP_{Length}$ = Cyclic Prefix Length). In the WLAN scenario as indicated in Fig. 2 the cyclic prefix length is $CP_{length}$=16 samples and the channel length L depends on the particular channel realization. Results show that in absence of a dedicated strategy for taking care of NBI, synchronization in presence of strong interferer is in most of the cases impossible. On the other hand, results obtained after NBI cancellation are very close to the ideal optimum of the interference-free case.

As shown in Fig. 9, the carrier frequency estimation error has an impact on both the NBI cancellation performance and the BER. The carrier frequency estimation MSE (MSE = Mean Square Error) is defined as

$$E\left\{|\nu - \hat{\nu}|^2\right\} \qquad (18)$$

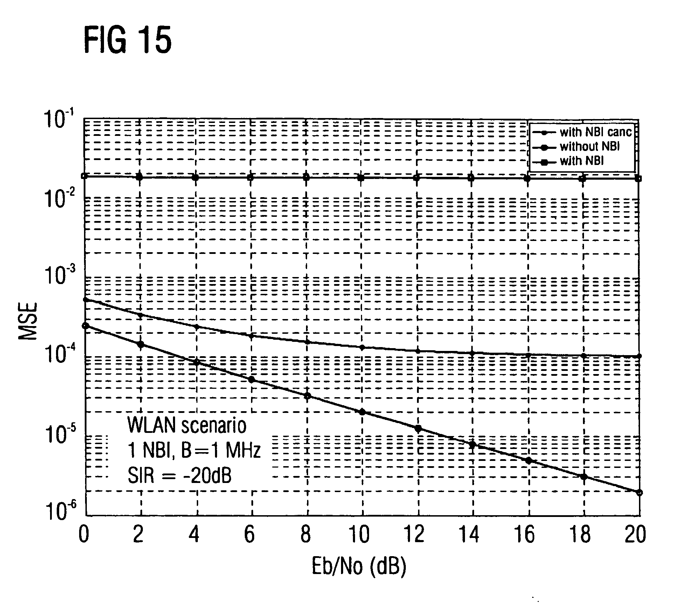

Fig. 15 shows the carrier frequency MSE with respectively without NBI cancellation and for reference without NBI. The MSE has been computed assuming perfect timing estimation and a frequency offset $\nu$=0. Once again, estimation performance is very poor without interference cancellation. The residual interference due to the power leakage determines an error floor in the performance of the frequency estimation algorithm after NBI cancellation. Nonetheless, results presented above show that this floor is sufficiently low in the simulation scenarios that have been investigated.

Embodiments of the present invention have the advantage that conventional systems can be used to cancel narrowband interference. Since no changes to e.g. the 802.11 specifications are needed, narrowband interference can be detected reliably, accordingly, the narrowband interference can be reduced and synchronization and frequency offsets can be determined more accurately. Overall embodiments of the present invention therewith provide a more robust transmission and a higher system performance.

Depending on certain implementation requirements of the inventive methods, the inventive methods can be implemented in hardware or in software. The implementation can be performed using a digital storage medium, in particular a disc, DVD or a CD having electronically readable control signals stored thereon, which cooperate with a programmable computer system such that the inventive methods are performed. Generally, the present invention is, therefore, a computer program product with a program code stored on a machine-readable carrier, the program code being operative for performing the inventive methods when the computer program product runs on a computer. In other words, the inventive methods are therefore, a computer program having a program code for performing at least one of the inventive methods when the computer program runs on a computer.

List of Reference Signs

| | |
|---|---|
| 100 | Receiver apparatus |
| 110 | Means for transforming |
| 120 | Means for detecting |
| 130 | Means for cancelling |
| | |
| 150 | Narrowband interference estimator |
| 155 | Narrowband interference canceller |
| 160 | Timing and frequency estimator |
| 165 | Timing and frequency corrector |
| 170 | Channel estimator |
| 175 | Data detector |
| | |
| 300 | WLAN preamble |
| 310 | First block |
| 320 | Second block |
| 330 | Third block |
| | |
| 400 | Preamble |
| 410 | First block |
| 420 | Second block |
| 430 | Third block |
| | |
| 600 | First spectrum |
| 602 | Intended subcarrier |
| 604 | Narrowband interference |
| 610 | Second spectrum |
| | |
| 700 | 4N Fast Fourier Transform |
| 710 | Narrowband interference canceller |
| 715 | Calculator |
| 720 | Narrowband interference estimator |
| 725 | 4N Inverse Fast Fourier Transform |

**Claims**

**1.** Receiver apparatus (100) for detecting narrowband interference in a multi-carrier receive signal, the multi-carrier receive signal being comprised of a plurality of subcarriers and having a structure of sequential time frames, comprising:

a means (110) for transforming a composed receive signal, which is based on a transmit signal having subcarriers with a predefined amplitude and having subcarriers with a zero amplitude, to the frequency domain to obtain a composed receive signal spectrum, the composed receive signal being composed of multi-carrier receive signals of multiple time frames;

a means (120) for detecting narrowband interference by comparing subcarrier intensities from the composed receive signal spectrum to a detection threshold; and

a means (130) for cancelling a subcarrier in the composed receive signal spectrum if the intensity of the subcarrier is above the detection threshold.

2. Receiver apparatus (100) of claim 1, wherein the means (120) for detecting narrowband interference is adapted for comparing subcarrier intensities from the composed receive signal spectrum of a subcarrier, which is based on a zero amplitude subcarrier in the transmit signal, to the detection threshold.

3. Receiver apparatus (100) of claim 1 or 2 further comprising a means for transforming the composed receive signal spectrum with cancelled subcarriers to the time domain to obtain a composed receive signal with reduced narrowband interference.

4. Receiver apparatus (100) of one of the claims 1 to 3, wherein the means (110) for transforming is adapted for transforming a multi-carrier receive signal which is based on a transmit signal composed of repeated transmit sequences, wherein a duration of a transmit sequence is less than a time frame.

5. Receiver apparatus (100) of claim 4, wherein the duration of a transmit sequence is a quarter of the time frame.

6. Receiver apparatus (100) of claim 5, wherein the transmit sequence is repeated ten times.

7. Receiver apparatus (100) of one of the claims 1 to 6, further comprising a means for time synchronizing on the composed receive signal with reduced narrowband interference.

8. Receiver apparatus (100) of one of the claims 1 to 7, further comprising a means for estimating a frequency offset based on the composed receive signal with reduced narrowband interference.

9. Receiver apparatus (100) of one of the claims 1 to 8, wherein the means (130) for cancelling a subcarrier is further adapted for cancelling subcarriers within a frequency range around a frequency of the subcarrier, which's intensity is above the detection threshold.

10. Receiver apparatus (100) of claim 9, wherein the frequency range spans across two consecutive subcarriers.

11. Receiver apparatus (100) of one of the claims 1 to 10, being adapted for detecting narrowband interference in an OFDM system.

12. Method for detecting a narrowband interference in a multi-carrier receive signal, the multi-carrier receive signal being comprised of a plurality of subcarriers and having a structure of sequential time frames, comprising the steps of:

transforming a composed receive signal, which is based on a transmit signal having subcarriers with a predefined amplitude and having subcarriers with a zero amplitude, to the frequency domain to obtain a composed receive signal spectrum, the composed receive signal being composed of a multi-carrier receive signals of multiple time frames;

detecting narrowband interference by comparing subcarrier intensities from the composed receive signal spectrum to a detection threshold; and

cancelling a subcarrier in the composed receive signal spectrum if the intensity of the subcarrier is above the detection threshold.

13. Computer program having a program code for performing the method of claim 12, when the computer program runs on a computer.

**EP 1 959 625 B1**

**Patentansprüche**

1. Empfängervorrichtung (100) zum Erfassen einer Schmalbandstörung bei einem Mehrträgerempfangssignal, wobei das Mehrträgerempfangssignal aus einer Mehrzahl von Teilträgern gebildet ist und eine Struktur sequentieller Zeitrahmen aufweist, mit folgenden Merkmalen:

   einer Einrichtung (110) zum Transformieren eines zusammengesetzten Empfangssignals, das auf einem Sendesignal basiert, das Teilträger mit einer vordefinierten Amplitude und Teilträger mit einer Amplitude von null aufweist, in den Frequenzbereich, um ein zusammengesetztes Empfangssignalspektrum zu erhalten, wobei das zusammengesetzte Empfangssignal aus Mehrträgerempfangssignalen mehrerer Zeitrahmen gebildet ist;
   einer Einrichtung (120) zum Erfassen einer Schmalbandstörung durch ein Vergleichen von Teilträgerintensitäten aus dem zusammengesetzten Empfangssignalspektrum mit einer Erfassungsschwelle; und
   einer Einrichtung (130) zum Unterdrücken eines Teilträgers in dem zusammengesetzten Empfangssignalspektrum, falls die Intensität des Teilträgers über der Erfassungsschwelle liegt.

2. Empfängervorrichtung (100) gemäß Anspruch 1, bei der die Einrichtung (120) zum Erfassen einer Schmalbandstörung angepasst ist zum Vergleichen von Teilträgerintensitäten aus dem zusammengesetzten Empfangssignalspektrum eines Teilträgers, der auf einem Teilträger einer Amplitude von null in dem Sendesignal basiert, mit der Erfassungsschwelle.

3. Empfängervorrichtung (100) gemäß Anspruch 1 oder 2, die ferner eine Einrichtung zum Transformieren des zusammengesetzten Empfangssignalspektrums mit unterdrückten Teilträgern in den Zeitbereich aufweist, um ein zusammengesetztes Empfangssignal mit verringerter Schmalbandstörung zu erhalten.

4. Empfängervorrichtung (100) gemäß einem der Ansprüche 1 bis 3, bei der die Einrichtung (110) zum Transformieren angepasst ist zum Transformieren eines Mehrträgerempfangssignals, das auf einem Sendesignal basiert, das aus wiederholten Sendesequenzen gebildet ist, wobei eine Dauer einer Sendesequenz geringer als ein Zeitrahmen ist.

5. Empfängervorrichtung (100) gemäß Anspruch 4, bei der die Dauer einer Sendesequenz ein Viertel des Zeitrahmens beträgt.

6. Empfängervorrichtung (100) gemäß Anspruch 5, bei der die Sendesequenz zehnmal wiederholt ist.

7. Empfängervorrichtung (100) gemäß einem der Ansprüche 1 bis 6, die ferner eine Einrichtung zum zeitlichen Synchronisieren auf das zusammengesetzte Empfangssignal mit verringerter Schmalbandstörung aufweist.

8. Empfängervorrichtung (100) gemäß einem der Ansprüche 1 bis 7, die ferner eine Einrichtung zum Schätzen eines Frequenzversatzes basierend auf dem zusammengesetzten Empfangssignal mit verringerter Schmalbandstörung aufweist.

9. Empfängervorrichtung (100) gemäß einem der Ansprüche 1 bis 8, bei der die Einrichtung (130) zum Unterdrücken eines Teilträgers ferner angepasst ist zum Unterdrücken von Teilträgern innerhalb eines Frequenzbereichs um eine Frequenz des Teilträgers herum, dessen Intensität über der Erfassungsschwelle liegt.

10. Empfängervorrichtung (100) gemäß Anspruch 9, bei der der Frequenzbereich zwei aufeinander folgende Teilträger überspannt.

11. Empfängervorrichtung (100) gemäß einem der Ansprüche 1 bis 10, die zum Erfassen einer Schmalbandstörung bei einem OFDM-System angepasst ist.

12. Verfahren zum Erfassen einer Schmalbandstörung bei einem Mehrträgerempfangssignal, wobei das Mehrträgerempfangssignal aus einer Mehrzahl von Teilträgern gebildet ist und eine Struktur sequentieller Zeitrahmen aufweist, mit folgenden Schritten:

   Transformieren eines zusammengesetzten Empfangssignals, das auf einem Sendesignal basiert, das Teilträger mit einer vordefinierten Amplitude und Teilträger mit einer Amplitude von null aufweist, in den Frequenzbereich, um ein zusammengesetztes Empfangssignalspektrum zu erhalten, wobei das zusammengesetzte Empfangssignal aus Mehrträgerempfangssignalen mehrerer Zeitrahmen gebildet ist;

12

**EP 1 959 625 B1**

Erfassen einer Schmalbandstörung durch ein Vergleichen von Teilträgerintensitäten aus dem zusammengesetzten Empfangssignalspektrum mit einer Erfassungsschwelle; und

Unterdrücken eines Teilträgers in dem zusammengesetzten Empfangssignalspektrum, falls die Intensität des Teilträgers über der Erfassungsschwelle liegt.

13. Computerprogramm mit einem Programmcode zum Durchführen des Verfahrens gemäß Anspruch 12, wenn das Computerprogramm auf einem Computer läuft.

**Revendications**

1. Appareil de réception (100) pour la détection d'une interférence à bande étroite dans un signal de réception à porteuses multiples, le signal de réception à porteuses multiples étant composé d'une pluralité de sous-porteuses et ayant une structure de trames séquentielles dans le temps, comprenant:

   un moyen (110) destiné à transformer au domaine de la fréquence un signal de réception composé basé sur un signal de transmission présentant des sous-porteuses d'amplitude prédéfinie et présentant des sous-porteuses d'amplitude zéro, pour obtenir un spectre de signal de réception composé, le signal de réception composé étant composé de signaux de réception à porteuses multiples de multiples trames dans le temps;
   un moyen (120) destiné à détecter une interférence à bande étroite en comparant les intensités de sous-porteuse du spectre de signal de réception composé avec un seuil de détection; et
   un moyen (130) destiné à annuler une sous-porteuse dans le spectre de signal de réception composé si l'intensité de la sous-porteuse est au-dessus du seuil de détection.

2. Appareil de réception (100) selon la revendication 1, dans lequel le moyen (120) destiné à détecter une interférence à bande étroite est adapté pour comparer les intensités de sous-porteuse du spectre de signal de réception composé d'une sous-porteuse basée sur une sous-porteuse d'amplitude zéro dans le signal de transmission avec le seuil de détection.

3. Appareil de réception (100) selon la revendication 1 ou 2, comprenant par ailleurs un moyen destiné à transformer au domaine du temps le spectre de signal de réception composé à sous-porteuses annulées, pour obtenir un signal de réception composé à interférence à bande étroite réduite.

4. Appareil de réception (100) selon l'une des revendications 1 à 3, dans lequel le moyen (110) destiné à transformer est adapté pour transformer un signal de réception à porteuses multiples basé sur un signal de transmission composé de séquences de transmission répétées, dans lequel une durée d'une séquence de transmission est inférieure à une trame dans le temps.

5. Appareil de réception (100) selon la revendication 4, dans lequel la durée d'une séquence de transmission est d'un quart de la trame dans le temps.

6. Appareil de réception (100) selon la revendication 5, dans lequel la séquence de transmission est répétée dix fois.

7. Appareil de réception (100) selon l'une des revendications 1 à 6, comprenant par ailleurs un moyen destiné à synchroniser dans le temps sur le signal de réception composé à interférence à bande étroite réduite.

8. Appareil de réception (100) selon l'une des revendications 1 à 7, comprenant par ailleurs un moyen destiné à estimer un décalage de fréquence sur base du signal de réception composé à interférence à bande étroite réduite.

9. Appareil de réception (100) selon l'une des revendications 1 à 8, dans lequel le moyen (130) destiné à annuler une sous-porteuse est par ailleurs adapté pour annuler des sous-porteuses dans une plage de fréquences autour d'une fréquence de la sous-porteuse dont l'intensité est au-dessus du seuil de détection.

10. Appareil de réception (100) selon la revendication 9, dans lequel la plage de fréquences s'étend sur deux sous-porteuses consécutives.

11. Appareil de réception (100) selon l'une des revendications 1 à 10, adapté pour détecter une interférence à bande étroite réduite dans un système OFDM.

**13**

12. Procédé pour détecter une interférence à bande étroite dans un signal de réception à porteuses multiples, le signal de réception à porteuses multiples étant composé d'une pluralité de sous-porteuses et ayant une structure de trames séquentielles dans le temps, comprenant les étapes consistant à:

transformer au domaine de la fréquence un signal de réception composé basé sur un signal de transmission présentant des sous-porteuses d'amplitude prédéfinie et présentant des sous-porteuses d'amplitude zéro, pour obtenir un spectre de signal de réception composé, le signal de réception composé étant composé de signaux de réception à porteuses multiples de multiples trames dans le temps;

détecter une interférence à bande étroite en comparant les intensités de sous-porteuse du spectre de signal de réception composé avec un seuil de détection; et

annuler une sous-porteuse dans le spectre de signal de réception composé si l'intensité de la sous-porteuse est au-dessus du seuil de détection.

13. Programme d'ordinateur ayant un code de programme pour réaliser le procédé selon la revendication 12 lorsque le programme d'ordinateur est exécuté sur un ordinateur.

## FIG 1a

| means for transforming | means for detecting | means for cancelling |
|---|---|---|

⎿110    ⎿120    ⎿130

<u>100</u>

## FIG 1b

Received signal → Frequency domain NBI cancellation ⎿155 → Timing and frequency estimation (S&C) ⎿160

Timing and frequency correction ⎿145 → Data detection ⎿175

NBI estimation ⎿150

<u>100</u>

Channel estimation ⎿170

## FIG 2

| Carrier Frequency | 2.4 GHz |
|---|---|
| Constellation | QPSK |
| Transmission Bandwidth | 20 MHz |
| Number of subcarriers | N = 64 |
| OFDM block duration | 3.2 $\mu$s |
| Cyclic prefix | 0.8 $\mu$s |
| Channel Model | Model A ETSI BRAN |

## FIG 3

300

310    320    330

8 + 8 = 16$\mu$s

8$\mu$s    8,0$\mu$s    4,0$\mu$s    4,0$\mu$s    4,0$\mu$s

$t_1$ $t_2$ $t_3$ $t_4$ $t_5$ $t_6$ $t_7$ $t_8$ $t_9$ $t_{10}$   N/2   N   N

Signal Detect, AGC    Coarse Freq. Offset Estimation    Channel and Fine Frequency Offset Estimation    RATE LENGTH    SERVICE + DATA   DATA

**FIG 4**

400

410 420 430

2xN+N/4

| NBI estimation | | S&C timing & frequency estimation | | Channel estimation | | Data |
|---|---|---|---|---|---|---|

10xN/4

N+N/4

**FIG 5**

410

N/4

| B | B | B | B | B | B | B | B | B | B |
|---|---|---|---|---|---|---|---|---|---|

## FIG 6a

## FIG 6b

## FIG 7

Sets to zero the subcarriers where interference is larger than a certain threshold

Received signal

Time domain samples

4N FFT

700

NBI cancellation

710

4N IFFT

Time domain samples

725

Calculates the interference power on all subcarriers

715

NBI estimation

720

100

## FIG 8

WLAN scenario
Eb/No = 20dB
ni=0.1
1 NBI, B=1 MHz
SIR = -20dB

BER

Threshold

## FIG 9

## FIG 10

FIG 11

## FIG 12

WLAN scenario
Eb/No = 20dB
without NBI

## FIG 13

WLAN scenario
Eb/No = 20dB
with NBI

## FIG 14

## FIG 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   WO 200415946 A1